# FASCICULE DE BREVET EUROPEEN

(11) **EP 2 356 608 B1**
(45) Date de publication et mention de la délivrance du brevet: **01.08.2012**
(21) Numéro de dépôt: 09749130.2
(22) Date de dépôt: 12.11.2009
(51) Int. Cl.: G06F 21/00

(54) **PROCEDE ET DISPOSITIF DE DIAGNOSTIC DE LA PREMIERE RECEPTION D'UN IDENTIFIANT, PROCEDE DE DETECTION, SUPPORT D'ENREGISTREMENT ET PROGRAMME D'ORDINATEUR POUR CE PROCEDE**
VERFAHREN UND EINRICHTUNG ZUM DIAGNOSTIZIEREN DES ERSTEN EMPFANGS EINER KENNUNG, DETEKTIONSVERFAHREN, SPEICHERMEDIUM UND COMPUTERSOFTWARE FÜR DAS VERFAHREN
METHOD AND DEVICE FOR DIAGNOSING THE FIRST RECEPTION OF AN IDENTIFIER, DETECTION METHOD, STORAGE MEDIUM AND COMPUTER SOFTWARE FOR SAID METHOD

(30) Priorité: 20.11.2008 FR 0857881
(43) Date de publication de la demande: 17.08.2011
(73) Titulaire: Viaccess, 92057 Paris La Défense (FR)
(72) Inventeur: GADACHA, Haythem, F-75015 Paris (FR)
(74) Mandataire: Colombo, Michel
(86) Numéro de dépôt international: PCT/EP2009/065050
(87) Numéro de publication internationale: WO 2010/057828

(56) Documents cités:
- EP-A- 1 827 019
- FR-A- 2 748 144

## Description

L'invention concerne un procédé et un dispositif de diagnostic automatique de la première réception d'un identifiant. L'invention concerne également un procédé de détection d'un message rejoué ainsi qu'un support d'enregistrement et un programme d'ordinateur pour mettre en oeuvre ces procédés.

Pour illustrer l'intérêt d'un procédé de diagnostic de la première réception d'un identifiant, nous nous plaçons dans un contexte où un terminal reçoit des contenus multimédias chiffrés. Dans un tel contexte, un module généralement appelé agent DRM (Digital Rights Management) ou CAS (Conditional Access System) est exécuté dans le terminal ou dans une carte à puce connectée à ce terminal. Cet agent DRM ou CAS est chargé de vérifier les conditions d'accès au contenu multimédia chiffré. Si les conditions d'accès sont remplies, il autorise le déchiffrement du contenu multimédia. Dans le cas contraire, le déchiffrement est prohibé.

Par exemple, les conditions d'accès sont la détention d'une licence valide ou de droit d'accès valide. Pour simplifier, nous supposons ici que les conditions d'accès sont une licence comportant :
- une clef CEK de déchiffrement du contenu multimédia,
- un ensemble de droits définissant des actions autorisées sur le contenu multimédia déchiffré, telles que sa visualisation, son impression, sa sauvegarde ou autre, et
- des contraintes limitant la consommation de ces droits, telles qu'une durée cumulée maximale T_{c} d'utilisation du contenu multimédia ou un nombre maximal N_{c} d'utilisations du contenu multimédia.

Dans ces conditions, un utilisateur malintentionné peut enregistrer le message contenant la licence puis le présenter à nouveau à l'agent DRM ou CAS de temps en temps comme s'il s'agissait d'un nouveau message. Cette action de présentation répétée de message s'appelle « rejeu » de message. La tentative de rejouer des messages s'appelle une attaque par rejeu.

Lorsque le terminal peut communiquer de façon bidirectionnelle avec le serveur de licences qui émet le message contenant la licence, il existe une solution efficace pour lutter contre les attaques par rejeu. Cette solution consiste à insérer un nombre aléatoire tiré par le terminal dans chaque demande ou requête de licence émise par le terminal vers le serveur. Le message contenant la licence demandée qui est émis par le serveur vers le terminal contient le même nombre aléatoire récupéré dans la demande. Dès lors, l'agent DRM ou CAS peut simplement diagnostiquer une attaque par rejeu en comparant le nombre aléatoire émis à celui reçu en réponse. Toutefois, cette solution nécessite une communication bidirectionnelle entre le terminal et le serveur. Or, une telle communication bidirectionnelle n'est pas toujours possible. Par exemple, il existe des situations où les messages ne peuvent être transmis que du serveur vers le terminal mais pas dans l'autre sens.

Dans le cas où la communication bidirectionnelle n'est pas possible, il est connu d'inclure un identifiant UID dans chaque message que l'on ne souhaite pas voir rejoué. L'identifiant UID identifie de façon unique ce message parmi un ensemble de messages susceptible d'être généré. Lorsque ce message est reçu pour la première fois, le terminal enregistre l'identifiant UID dans une mémoire anti-rejeu du terminal. Cette mémoire anti-rejeu est parfois appelée « cache anti-rejeu ». Par contre, si ce message est reçu pour la deuxième fois ou plus, le terminal détecte cette attaque par rejeu en recherchant l'identifiant UID contenu dans le message parmi ceux déjà contenus dans la mémoire anti-rejeu. Si l'identifiant UID se trouve déjà dans la mémoire anti-rejeu, cela signifie que ce message a déjà été reçu et qu'il s'agit donc d'un message rejoué. Les documents FR-2748144 et EP-1827019-A1 divulguant des mécanismes anti-rejeu.

Le procédé de diagnostic mis en oeuvre comporte donc :
a) la recherche d'un identifiant nouvellement reçu parmi ceux contenus dans une mémoire anti-rejeu pour diagnostiquer s'il s'agit de la première réception ou pas de cet identifiant nouvellement reçu, cette mémoire anti-rejeu pouvant contenir au plus M identifiants.
   L'efficacité de ce procédé de diagnostic de la première réception d'un identifiant UID et donc de la détection d'un message rejoué est limitée par la taille de la mémoire anti-rejeu. En effet, une mémoire a nécessairement une taille limitée. La taille de la mémoire anti-rejeu dépend du terminal utilisé mais elle peut être particulièrement réduite lorsque l'agent DRM ou CAS se trouve dans une carte à puce.
   La mémoire anti-rejeu ne peut donc contenir qu'un nombre limité d'identifiants UID. Le nombre maximum d'identifiants UID enregistrables dans la mémoire anti-rejeu est ici noté M. Par conséquent, après avoir reçu pour la première fois M messages et donc M identifiants UID, il faut effacer certains identifiants UID de la mémoire anti-rejeu pour pouvoir enregistrer les nouveaux identifiants UID reçus. Il est dès lors possible de rejouer les messages dont les identifiants UID ont étés effacés.
   L'invention vise à améliorer l'efficacité du procédé de diagnostic de la première réception d'un identifiant.
   Elle a donc pour objet un tel procédé comprenant :
b) la construction d'au moins une limite en fonction de N identifiants déjà reçus, où N est strictement supérieur à M, cette limite étant construite de manière à délimiter d'un côté une plage d'identifiants qui n'ont pas encore été reçus et de l'autre côté une plage d'identifiants contenant les N identifiants déjà reçus,
c) la comparaison de l'identifiant nouvellement reçu à cette limite pour déterminer si l'identifiant nouvellement reçu appartient à la plage des identifiants qui n'ont pas encore été reçus,
d) si l'identifiant nouvellement reçu appartient à la plage des identifiants qui n'ont pas encore été reçus, le diagnostic d'une première réception de l'identifiant nouvellement reçu et une nouvelle construction de la limite en fonction de l'identifiant nouvellement reçu, et
e) si l'identifiant nouvellement reçu appartient à la plage d'identifiants contenant les N identifiants déjà reçus, l'exécution de l'étape a).

Dans le procédé ci-dessus, étant donné que la limite est calculée en fonction de plus d'identifiants déjà reçus que les M identifiants contenus dans la mémoire anti-rejeu, cette limite conserve intrinsèquement la trace d'un nombre d'identifiants strictement supérieur au nombre M. Dès lors, au moins lorsque l'identifiant nouvellement reçu appartient à la plage des identifiants qui n'ont pas encore été reçus, le degré de certitude sur le diagnostic posé est supérieur à celui obtenu à l'issue de l'étape a). L'efficacité de ce procédé est donc améliorée.

Les modes de réalisation de ce procédé de diagnostic peuvent comporter une ou plusieurs des caractéristiques suivantes :
■ le procédé comprend :
   - la construction de ladite limite pour différentes classes d'identifiants, pour chaque classe d'identifiants la limite associée à cette classe étant construite en fonction des N identifiants déjà reçus et appartenant à cette classe d'identifiants,
   - l'identification de la classe d'identifiants à laquelle appartient l'identifiant nouvellement reçu parmi les classes d'identifiants existantes, et
   - l'étape c) consiste à comparer l'identifiant nouvellement reçu à la limite associée à la classe identifiée et à ne pas comparer l'identifiant nouvellement reçu aux limites associées aux classes auxquelles il n'appartient pas ;
■ le procédé comprend :
   - l'identification, à l'aide d'une loi prédéterminée de répartition des différents identifiants recevables dans différentes sections de la mémoire anti-rejeu, de la section de la mémoire anti-rejeu dans laquelle l'identifiant nouvellement reçu est enregistrable, parmi plusieurs sections existantes, et
   - lors de l'étape a), la recherche de l'identifiant nouvellement reçu seulement parmi les identifiants contenus dans la section identifiée de la mémoire anti-rejeu et non parmi les identifiants contenus dans les sections de la mémoire anti-rejeu dans lesquelles l'identifiant nouvellement reçu n'est pas enregistrable ;
■ le procédé comprend :
   - le comptage du nombre d'identifiants nouvellement reçus pendant un intervalle de temps,
   - la comparaison de ce nombre à un seuil prédéterminé, et
   - si et seulement si le seuil prédéterminé est franchi, la détection d'une attaque par rejeu ;
■ le procédé comprend :
   - le comptage du nombre d'identifiants, pendant un intervalle de temps, pour lesquels il est diagnostiqué qu'ils ne sont pas reçus pour la première fois,
   - la comparaison de ce nombre à un seuil prédéterminé, et
   - si et seulement si ce seuil est franchi, la détection d'une attaque par rejeu ;
■ si l'étape d) est exécutée, l'étape a) n'est pas exécutée pour cet identifiant nouvellement reçu ;
■ la construction de la limite comprend la détermination d'un minorant ou d'un majorant des N identifiants déjà reçus.

Ces modes de réalisation du procédé de diagnostic présentent en outre les avantages suivants :
- le fait de répartir les identifiants en classes d'identifiants et d'avoir une limite pour chaque classe d'identifiants permet d'accroître l'efficacité du procédé en augmentant le nombre de cas dans lequel l'étape a) n'a pas à être exécutée,
- le fait de rechercher l'identifiant nouvellement reçu uniquement parmi les identifiants contenus dans une section particulière de la mémoire anti-rejeu permet de diagnostiquer plus rapidement la première réception d'un identifiant,
- le comptage du nombre d'identifiants nouvellement reçus et la comparaison de ce nombre à un seuil permet de détecter des attaques par rejeu,
- le comptage du nombre d'identifiants qui ne sont pas reçus pour la première fois et la comparaison de ce nombre à un seuil permet également de détecter des attaques par rejeu,
- la non-exécution de l'étape a) lorsque l'étape d) est exécutée permet un gain en temps d'exécution car il est possible de diagnostiquer la première réception d'un identifiant sans avoir à rechercher cet identifiant nouvellement reçu parmi les identifiants contenus dans la mémoire anti-rejeu.

L'invention a également pour objet un procédé de détection d'un message rejoué, chaque message contenant un identifiant permettant de le distinguer des autres messages, ce procédé comportant un diagnostic automatique de la première réception de l'identifiant pour établir si un message reçu est rejoué, conformément au procédé de diagnostic ci-dessus.

L'invention a également pour objet un support d'enregistrement d'informations et un programme d'ordinateur comportant des instructions pour exécuter l'un des procédés ci-dessus, lorsque ces instructions sont exécutées par un calculateur électronique.

Enfin, l'invention a également pour objet un dispositif de diagnostic automatique de la première réception d'un identifiant, ce dispositif comportant :
- un module de recherche d'un identifiant nouvellement reçu parmi ceux contenus dans une mémoire anti-rejeu,
- la mémoire anti-rejeu, cette mémoire pouvant contenir au plus M identifiants auxquels l'identifiant nouvellement reçu peut êtrecomparé,
- un constructeur d'au moins une limite en fonction de N identifiants déjà reçus, où N est strictement supérieur à M, la limite étant construite de manière à délimiter d'un côté une plage d'identifiants qui n'ont pas encore été reçus et de l'autre côté une plage d'identifiants contenant les N identifiants déjà reçus,
- un comparateur de l'identifiant nouvellement reçu à cette limite pour déterminer si l'identifiant reçu appartient à la plage des identifiants qui n'ont pas encore été reçus, ce comparateur étant apte :
   - à diagnostiquer une première réception de l'identifiant nouvellement reçu si ce nouvel identifiant appartient à la plage des identifiants qui n'ont pas encore été reçus et à activer le constructeur pour lancer une nouvelle construction de la limite en fonction de l'identifiant nouvellement reçu, et
   - à activer le module de recherche pour lancer la recherche de l'identifiant nouvellement reçu parmi ceux contenus dans la mémoire anti-rejeu si l'identifiant nouvellement reçu appartient à la plage des identifiants contenant les N identifiants déjà reçus.

L'invention sera mieux comprise à la lecture de la description qui va suivre, donnée uniquement à titre d'exemple non limitatif et faite en se référant aux dessins sur lesquels :
- la Figure 1 est une illustration schématique de l'architecture d'un système de transmission d'informations équipé d'un dispositif de diagnostic de la première réception d'un identifiant,
- la Figure 2 est une illustration schématique d'une portion d'un message transmis dans le système de la Figure 1,
- la Figure 3 est un organigramme d'un procédé de détection d'un message rejoué utilisant le dispositif de diagnostic du système de la Figure 1.

Dans ces figures, les mêmes références sont utilisées pour désigner les mêmes éléments.

Dans la suite de cette description, les caractéristiques et fonctions bien connues de l'homme du métier ne sont pas décrites en détail.

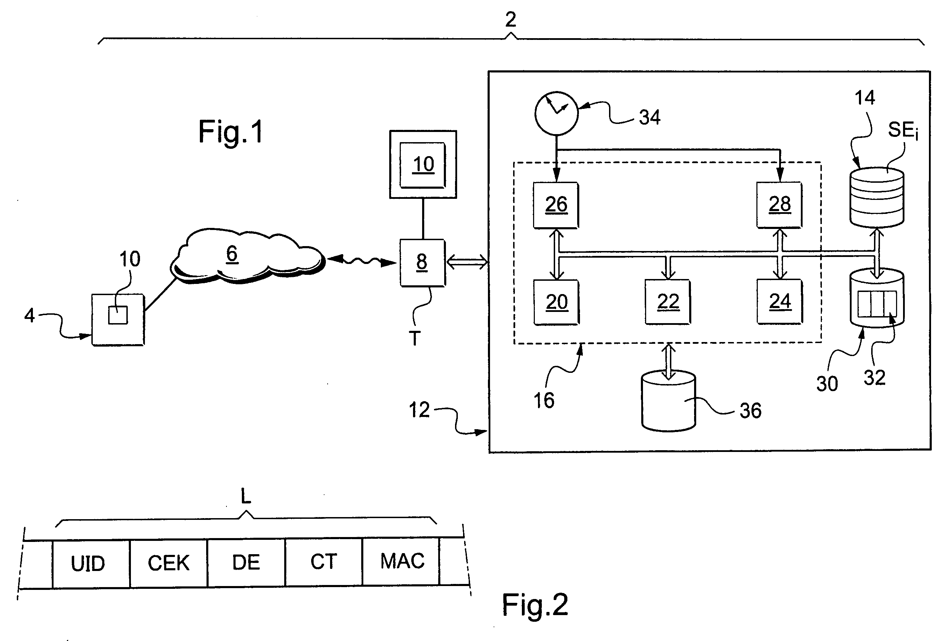

La Figure 1 représente un système 2 de transmission d'informations. A titre d'illustration, ce système est un système de transmission de contenu multimédia chiffré. Il contient un serveur 4 de licences raccordé à une multitude de terminaux par l'intermédiaire d'un réseau 6 de transmission d'informations. Par exemple, le réseau 6 est un réseau de transmission d'informations par satellite.

Pour simplifier la Figure 1, seul un terminal 8 a été représenté.

Le serveur 4 émet des messages à destination des terminaux. Ces messages contiennent des licences permettant à chaque terminal de déchiffrer un contenu multimédia précédemment reçu. A cet effet, le serveur 4 comprend un générateur 10 d'identifiants UID. Ce générateur 10 génère pour chaque message émis par le serveur 4 un identifiant UID qui identifie de façon unique ce message parmi l'ensemble des messages envoyés. Par exemple, l'identifiant UID est obtenu en construisant une empreinte numérique de la licence à l'aide de fonctions telles qu'une fonction de hachage. L'identifiant UID peut également être obtenu en tirant un nombre aléatoire.

La taille requise de l'identifiant UID est fonction du nombre de terminaux auxquels doivent être transmis des messages ainsi que du nombre de messages transmis à chaque terminal. Ici, le nombre de messages transmis à chaque terminal correspond au nombre de licences achetées à partir de ce terminal. Typiquement, l'identifiant UID est codé sur 16 octets.

Le terminal 8 reçoit les messages transmis par le serveur 4. Par exemple, ce terminal 8 est un décodeur apte à recevoir une licence et le contenu multimédia chiffré puis à déchiffrer à l'aide de la clef contenue dans la licence le contenu multimédia pour permettre sa visualisation en clair sur un écran 10.

Le terminal 8 comprend un dispositif 12 de diagnostic automatique de la première réception d'un identifiant UID. Pour simplifier les illustrations, le dispositif 12 est représenté en dehors du terminal 8. Toutefois, dans la pratique, ce dispositif 12 est intégré au terminal 8 ou implanté dans un processeur de sécurité connecté au terminal 8. Par exemple, le processeur de sécurité est une carte à puce. Typiquement, le dispositif 12 fait partie d'un agent DRM ou CAS.

Le dispositif 12 comprend une mémoire anti-rejeu 14. Ici, cette mémoire 14 est divisée en plusieurs sections SEᵢ. L'intersection de deux sections quelconques SEᵢ est nulle.

Le dispositif 12 comprend également un calculateur électronique 16 apte à diagnostiquer la première réception d'un identifiant UID. A cet effet, ce calculateur 16 comprend :
- un module 20 de recherche d'identifiants UID parmi ceux contenus dans la mémoire 14,
- un comparateur 22 de l'identifiant nouvellement reçu à des limites,
- un constructeur 24 des limites utilisées par le comparateur 22,
- un compteur 26 d'identifiants UID reçus, et
- un compteur 28 de messages rejoués.

Ces éléments sont raccordés les uns aux autres ainsi qu'à la mémoire 14 et à une mémoire 30 par un bus de communication.

Ici, le domaine des valeurs des identifiants UID est partitionné en différentes classes Cⱼ. Chaque identifiant UID est donc classé dans une classe Cⱼ. Pour cela, une fonction f_{c} prédéterminée de classification est utilisée. Cette fonction fₑ retourne pour chaque identifiant UID l'indice i de la classe à laquelle il appartient. Ici, la fonction f_{c} est telle que l'union de l'ensemble des classes Cⱼ correspond à l'ensemble des identifiants UID qui peuvent être générés dans le système 2. De préférence, l'intersection deux à deux des classes Cⱼ est vide. Ainsi, un identifiant UID donné ne peut appartenir qu'à une seule classe Cⱼ. Chaque classe Cⱼ regroupe plusieurs identifiants UID possibles.

De préférence, cette fonction f_{c} est secrète. Par exemple, la fonction f_{c} est la fonction qui retourne le résultat de la division entière de l'identifiant UID nouvellement reçu par 2^{m-8} où m est le nombre de bits maximal utilisable pour coder un identifiant UID dans le système 2. Ainsi, une telle fonction f_{c} divise l'ensemble des identifiants UID qu'il est possible de générer en 2⁸ classes. Le résultat de cette fonction permet d'identifier la classe à laquelle appartient l'identifiant UID nouvellement reçu.

La mémoire 30 comprend notamment une table 32 associative. Cette table 32 associe à chaque classe Cⱼ d'identifiants une limite Sₘᵢₙⱼ et une limite Sₘₐₓⱼ construites par le constructeur 24. La limite Sₘᵢₙⱼ constitue un minorant des identifiants UID déjà reçus et appartenant à la classe Cⱼ. A l'inverse, la limite Sₘₐₓⱼ constitue un majorant pour ces mêmes identifiants UID déjà reçus. Ainsi, ces limites délimitent une plage [Sₘᵢₙⱼ; Sₘₐₓⱼ] contenant tous les identifiants UID déjà reçus et appartenant à la classe Cⱼ. Ces limites délimitent aussi deux plages]-2m⁻¹; Sₘᵢₙⱼ[ et ]Sₘₐₓⱼ ; +2^{m-1}] d'identifiants UID qui n'ont pas encore été reçus, où m est le nombre de bits maximal utilisable pour coder un identifiant UID dans le système 2. Ici, m est égal à 128.

Les compteurs 26 et 28 sont raccordés à une horloge fiable 34.

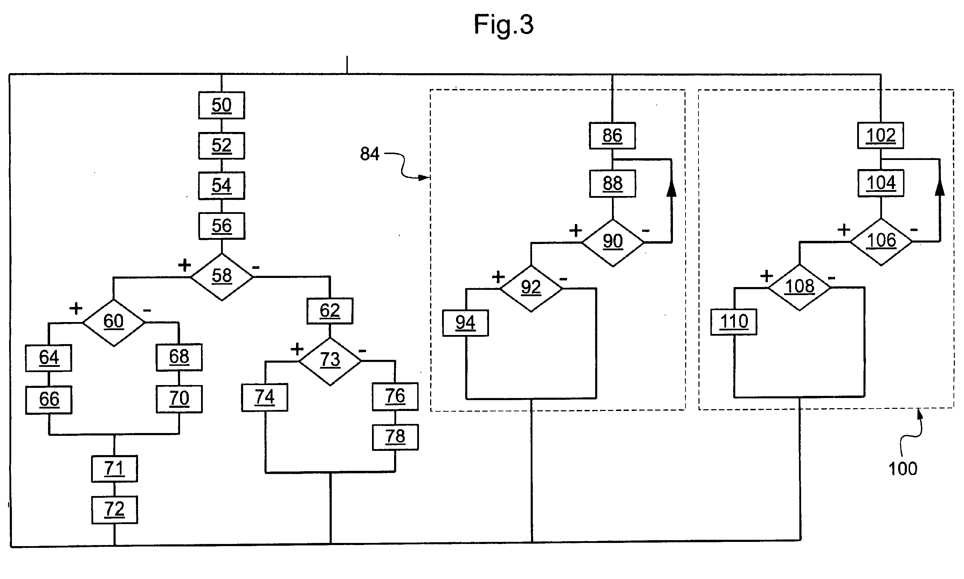

Le calculateur 16 est par exemple un calculateur programmable apte à exécuter des instructions enregistrées sur un support d'enregistrement d'informations. A cet effet, le calculateur 16 est raccordé à une mémoire 36 contenant un programme formé d'instructions pour l'exécution du procédé de la Figure 3.

La Figure 2 représente une portion d'un message transmis du serveur 4 vers le terminal 8. Ce message contient une licence L. La licence L contient un identifiant UID, une clef cryptographique CEK, des droits d'exploitation DE, des contraintes CT et une signature MAC permettant de vérifier l'intégrité de la licence. La signature MAC est calculée sur l'ensemble du contenu de la licence en prenant en compte, en particulier, l'identifiant UID.

Les droits d'exploitation ainsi que les contraintes sur ces droits d'exploitation ont été définis dans l'introduction de la présente description.

Le fonctionnement du système 2 va maintenant être décrit plus en détail en regard du procédé de la Figure 3.

Initialement, lors d'une étape 50, le terminal 8 reçoit un nouveau message transmis par le serveur 4 au travers du réseau 6.

Lors d'une étape 52, le terminal extrait l'identifiant UID contenu dans le message et le transmet au dispositif 12. Plus précisément, l'identifiant UID extrait est contenu dans la licence L. L'identifiant ainsi transmis au dispositif 12 constitue l'identifiant UID nouvellement reçu.

Lors d'une étape 54, le dispositif 12 identifie la classe Cⱼ à laquelle appartient l'identifiant UID nouvellement reçu. Pour cela, la fonction f_{c} est appliquée à l'identifiant UID nouvellement reçu.

Ensuite, lors d'une étape 56, le dispositif 12 recherche dans la table 32 quelles sont les limites Sₘᵢₙⱼ et Sₘₐₓⱼ associées à la classe Cⱼ identifiée lors de l'étape 54. Les limites ainsi trouvées sont ensuite utilisées pour l'ensemble des étapes décrites ci-dessous.

Lors d'une étape 58, le comparateur 22 compare l'identifiant UID nouvellement reçu aux limites Sₘᵢₙ et Sₘₐₓⱼ trouvées lors de l'étape 56. Si l'identifiant UID nouvellement reçu appartient à la plage]- 2^{m-1} ; Sₘᵢₙⱼ[ ou ]Sₘₐₓⱼ ; +2^{m-1} [, alors il est procédé à une étape 60. Dans le cas contraire, on procède à une étape 62.

Lors de l'étape 60, il est diagnostiqué, sans procéder à aucune comparaison de l'identifiant UID nouvellement reçu à ceux contenus dans la mémoire 14, que cet identifiant est reçu pour la première fois. Par conséquent, le message reçu n'est pas identifié comme étant un message rejoué. Par exemple, cette information est envoyée au terminal 8 qui accepte le message reçu et le traite. Le traitement consiste par exemple à extraire la clef CEK de la licence puis à déchiffrer à l'aide de cette clef extraite le contenu multimédia pour pouvoir le visualiser sur l'écran 10.

Lors de l'étape 60, le cas où l'identifiant UID est strictement supérieur à la limite Sₘₐₓⱼ est discriminé du cas où l'identifiant UID est strictement inférieur à la limite Sₘᵢₙⱼ.

Si l'identifiant UID est strictement supérieur à la limite Sₘₐₓⱼ, alors lors d'une étape 64, une nouvelle valeur de la limite Sₘₐₓⱼ est construite en fonction de l'identifiant UID nouvellement reçu. En effet, la valeur actuelle de la limite Sₘₐₓⱼ n'est plus un majorant des identifiants UID déjà reçus et appartenant à la classe Cⱼ. Par exemple, la construction de la nouvelle valeur de la limite Sₘₐₓⱼ consiste à remplacer sa valeur actuelle par la valeur de l'identifiant UID nouvellement reçu.

Une fois que la nouvelle valeur de la limite Sₘₐₓⱼ a été construite, lors d'une étape 66, celle-ci est enregistrée dans la table 32 à la place de l'ancienne valeur.

Dans le cas où l'identifiant UID nouvellement reçu est strictement inférieur à la limite Sₘᵢₙⱼ, lors d'une étape 68, une nouvelle valeur de la limite Sₘᵢₙⱼ est construite à partir de la valeur de l'identifiant UID nouvellement reçu. En effet, dans ce cas, la valeur actuelle de la limite Sₘᵢₙⱼ n'est plus un minorant des identifiants UID déjà reçus et appartenant à la classe Cⱼ. Par exemple, la construction de la nouvelle valeur de la limite Sₘᵢₙⱼ consiste à remplacer sa valeur actuelle par la valeur de l'identifiant UID nouvellement reçu.

Lors d'une étape 70, la nouvelle valeur de la limite Sₘᵢₙⱼ est enregistrée dans la table 32 à la place de son ancienne valeur.

A l'issue de l'étape 66 ou de l'étape 70, il est procédé à une étape 71 d'identification de la section SEᵢ dans laquelle doit être enregistrée l'ancienne valeur de la limite Sₘₐₓⱼ ou Sₘᵢₙⱼ. En effet, l'ancienne valeur de la limite est celle d'un identifiant UID reçu pour la première fois mais qui n'a pas encore été enregistré dans la mémoire 14. Elle est donc traitée comme un identifiant UID reçu pour la première fois. Ainsi, dans la suite de ces explications, cette ancienne valeur de la limite est appelée « identifiant UID nouvellement reçu ». A cet effet, une fonction f_{d} prédéterminée de répartition est utilisée. Cette fonction f_{d} retourne pour chaque identifiant UID l'indice i de la section dans laquelle il doit être enregistré. Ici, la fonction f_{d} est surjective. De plus, elle associe à chaque identifiant UID qui peut être généré un seul indice i. Ainsi, un identifiant UID donné ne peut être enregistré que dans une seule section SEᵢ. Chaque section SEᵢ permet d'enregistrer plusieurs identifiants UID. Par contre, la taille de chaque section SEᵢ ne peut pas contenir tous les identifiants UID susceptibles d'être générés dans le système 2 et qui sont enregistrables dans cette section.

Par exemple, la fonction f_{d} est identique à la fonction f_{c}. Dans ce cas, il est possible d'utiliser le résultat de l'étape 54. Un autre exemple de fonction f_{d} est la fonction qui retourne le reste de l'identifiant UID modulo 1024, ce qui permet dans ce cas de regrouper les identifiants dans 1024 sections.

Ensuite, lors d'une étape 72, l'identifiant UID nouvellement reçu est enregistré dans la section identifiée lors de l'étape 71. Si cette section n'est pas pleine, l'identifiant UID nouvellement reçu est enregistré en plus des identifiants UID déjà contenus dans la même section. Par contre, si la section SEᵢ de la mémoire 14 est déjà pleine, l'identifiant UID est enregistré à la place d'un autre identifiant UID contenu dans la même section. Cet autre identifiant UID peut par exemple être choisi au hasard ou sur le principe du premier entré premier sorti.

A l'issue de l'étape 72, le procédé retourne à l'étape 50.

L'étape 62 consiste à déterminer dans quelle section SEᵢ doit être enregistré l'identifiant UID nouvellement reçu. Cette étape est identique à l'étape 71.

Ensuite, lors d'une étape 73, l'identifiant UID nouvellement reçu est recherché uniquement parmi les identifiants enregistrés dans la section identifiée lors de l'étape 62. On comprend donc que la répartition des identifiants UID dans différentes sections de la mémoire à l'aide de la fonction f_{d} permet d'accélérer cette comparaison puisque seule une partie des identifiants enregistrés dans la mémoire 14 doivent être comparés à l'identifiant UID nouvellement reçu.

Si l'identifiant UID nouvellement reçu est identique à l'un de ceux enregistrés dans la mémoire 14, alors, lors d'une étape 74, le dispositif 12 diagnostique qu'il ne s'agit pas de la première réception de cet identifiant. Par conséquent, le message contenant cet identifiant a été rejoué. Cette information est communiquée au terminal 8.

Cette identification d'un message rejoué déclenche dans le terminal 8 des mesures correctives ou coercitives. Par exemple, le message rejoué peut être refusé de sorte que la clef CEK n'est pas extraite de la licence, ce qui rend impossible le déchiffrement du contenu multimédia.

Dans le cas où l'identifiant UID nouvellement reçu n'est pas dans la section identifiée lors de l'étape 62, alors, lors d'une étape 76, le dispositif 12 diagnostique que cet identifiant UID est reçu pour la première fois. Cette information est communiquée au terminal 8 qui réagit en conséquence. Par exemple, le terminal 8 accepte le message reçu, en extrait la licence et notamment la clef CEK qui autorise le déchiffrement du contenu multimédia à l'aide de la clef extraite.

Ensuite, lors d'une étape 78, l'identifiant UID nouvellement reçu est enregistré dans la section identifiée lors de l'étape 62. Cette étape est identique à l'étape 72.

A l'issue de l'étape 74 ou 78, le procédé retourne à l'étape 50.

Ici, la valeur de la limite Sₘₐₓⱼ est construite par récurrence à partir de l'ancienne valeur de la limite Sₘₐₓⱼ et de l'identifiant nouvellement reçu. Par conséquent, la valeur de la limite Sₘₐₓⱼ est fonction des N identifiants déjà reçus et appartenant à la même classe Cj. La valeur de la limite Sₘₐₓⱼ n'est pas réinitialisée. Ainsi, rapidement, ce nombre N dépasse le nombre M d'identifiants enregistrables dans la mémoire 14 et auxquels l'identifiant nouvellement reçu peut être comparé. Dans le cas où la mémoire 14 est divisée en plusieurs sections, le nombre M correspond au nombre maximal d'identifiants UID enregistrables dans la section SE;. En effet, ici, l'identifiant nouvellement reçu est uniquement recherché parmi ceux contenus dans la section SEᵢ dans laquelle il doit être enregistré. Il en est de même pour la construction de la limite Sₘᵢₙⱼ.

En parallèle des étapes 50 à 78, le dispositif 12 procède à une phase 84 d'identification d'une attaque massive par rejeu.

Initialement, lors d'une étape 86, l'instant courant t₀ donné par l'horloge 34 est enregistré par le compteur 26. En même temps, un compteur Nm-c est initialisé à zéro.

Ensuite, lors d'une étape 88, pour chaque identifiant UID nouvellement reçu, le compteur Nm-c est incrémenté de un. Puis, lors d'une étape 90, le compteur Nm-c est comparé à un seuil prédéterminé Nm-s. Ce seuil Nm-s est par exemple fixé par l'opérateur. Par exemple, sa valeur est de 40.

Si le compteur Nm-c n'a pas atteint la valeur du seuil Nm-s, alors le procédé retourne à l'étape 88.

Si le compteur Nm-c a atteint la valeur du seuil Nm-s, alors l'instant courant t₁ est enregistré par le compteur 26.

Ensuite, lors d'une étape 92, l'intervalle de temps Δt_{c} entre les instants t₀ et t₁ est comparé à un seuil de temps prédéterminé Ts. Ce seuil Ts est fixé par l'opérateur. Par exemple, ce seuil est égal à 6 heures.

Si l'intervalle Δt_{c} est inférieur au seuil Ts, lors d'une étape 94, le dispositif 12 détecte une attaque massive par rejeu. En effet, une attaque massive par rejeu se traduit par l'envoi d'un nombre anormalement élevé d'identifiants UID sur une période de temps courte. Dans le cas contraire, aucune attaque par rejeu n'est détectée. Si une attaque par rejeu est détectée, cette information est communiquée au terminal 8. En réponse, le terminal 8 déclenche des mesures correctives ou coercitives.

La phase 84 est répétée de temps en temps.

En parallèle de la phase 84, une autre phase 100 de détection d'une attaque massive par rejeu est exécutée.

Initialement, lors d'une étape 102, le compteur 28 enregistre l'instant courant t₀ et initialise un compteur Nm-r à la valeur zéro.

Ensuite, lors d'une étape 104, le compteur Nm-r est incrémenté de un à chaque fois qu'un identifiant UID est diagnostiqué comme ayant été déjà reçu. Ensuite, lors d'une étape 106, le compteur Nm-r est comparé à un seuil Nm-r-s. La valeur de ce seuil Nm-r-s est par exemple de dix.

Tant que le compteur Nm-r est inférieur à ce seuil Nm-r-s, l'étape 104 est réitérée.

Par contre, dans le cas contraire, le compteur 28 enregistre l'instant courant t₁. Ensuite, lors d'une étape 108, l'intervalle Δtᵣ obtenu en calculant la différence entre les instants t₀ et t₁ est comparé à un seuil Tᵣ. La valeur de ce seuil Tᵣ est par exemple de 5. Si l'intervalle Δtᵣ est inférieur au seuil Tᵣ, alors cela signifie qu'un nombre important d'identifiants UID ne sont pas reçus pour la première fois sur une période de temps prédéterminée. Une telle situation est représentative d'une attaque massive par rejeu. Ainsi, lors d'une étape 110, le compteur 28 détecte l'existence d'une attaque massive par rejeu. Cette information est transmise au terminal 8 qui la traite de façon similaire à ce qui a été décrit en regard de l'étape 94.

Après l'étape 110 ou si l'intervalle Δtᵣ est supérieur au seuil Tᵣ, le procédé retourne à l'étape 102.

Ainsi, les phases 84 et 100 permettent de détecter des attaques par rejeu et donc de prendre les mesures correctives ou coercitives correspondantes. Ces mesures correctives ou coercitives peuvent être une sanction directe telle que l'interdiction de tout déchiffrement à l'aide du terminal 8. Ces sanctions peuvent être également des sanctions progressives qui augmentent au fur et à mesure du nombre d'attaques par rejeu détectées. Enfin, la mesure corrective ou coercitive peut aussi être d'augmenter la surveillance des attaques par rejeu pour confirmer la réalité de telles attaques. La surveillance peut être augmentée en augmentant la fréquence à laquelle les phases 84 et 100 sont exécutées.

De nombreux autres modes de réalisation sont possibles. Par exemple, lorsqu'un serveur a besoin de détecter si des identifiants sont reçus pour la première fois, le dispositif de diagnostic de la première réception d'un identifiant décrit ici peut être mis en oeuvre du côté serveur. Par exemple, dans ce cas, ce sont les requêtes transmises des terminaux vers le serveur qui comportent chacune des identifiants UID.

Le terminal 8 n'est pas nécessairement un décodeur. Il peut s'agir d'un terminal mobile, d'un ordinateur, d'une carte à puce, ou de tout autre terminal électronique dans lequel il est nécessaire d'identifier la première réception d'un identifiant.

La mémoire 14 peut être un fichier tel que par exemple un fichier enregistré sur un disque dur.

Dans la mémoire 14, les identifiants UID peuvent être associés à des étiquettes de temps TS ou « Time Stamp ». Ces étiquettes de temps indiquent quel a été l'ordre d'enregistrement des identifiants UID dans la mémoire 14 ou quel est l'instant d'enregistrement de chacun de ces identifiants. Ces étiquettes de temps permettent de remplacer le plus vieil identifiant UID contenu dans une section ou dans l'ensemble de la mémoire 14 par l'identifiant nouvellement reçu lorsque celle-ci est pleine. Lorsque les étiquettes de temps sont utilisées, l'horloge 34 peut également être omise. Par exemple, pour la mise en oeuvre des phases 84 et 100, on utilise l'étiquette de temps associée à chaque identifiant UID reçu plutôt qu'une mesure de l'instant de réception de cette identifiant UID à l'aide de l'horloge 34.

Les valeurs des limites Sₘᵢₙⱼ et Sₘₐₓⱼ associées à chaque classe peuvent être réinitialisées de temps en temps.

Les valeurs des limites Sₘᵢₙⱼ et Sₘₐₓⱼ ne sont pas nécessairement initialisées à zéro. Par exemple, les limites Sₘᵢₙⱼ et Sₘₐₓⱼ peuvent être initialisées à des valeurs non nulles obtenues à partir de connaissance que l'on a sur les identifiants UID déjà utilisés dans le système 2.

D'autres fonctions f_{c} sont possibles. Un autre exemple de fonction f_{c} est la fonction qui retourne le reste de l'identifiant UID modulo 127, ce qui permet dans ce cas de définir 127 classes.

La fonction f_{d} peut être différente de la fonction f_{c}. Dans ce cas, il est nécessaire d'appliquer cette fonction f_{d} à la valeur de l'identifiant UID nouvellement reçu lors de l'étape 71 pour déterminer dans quelle section celui-ci doit être enregistré.

Les fonctions f_{c} et f_{d} sont rendues publiques ou, au contraire, conservées secrètes.

La fonction f_{c} ou f_{d} peut par exemple être choisie dans les codes à redondance cyclique CRC8 ou CRC16 pour définir respectivement 256 sections ou 65535 sections.

Dans un mode de réalisation alternatif, la fonction f_{d} peut-être sélectionnée dynamiquement selon la classe de l'identifiant UID nouvellement reçu, cette dernière étant determinée par f_{c}, Dans ce cas, la fonction f_{d} appliquée pourra être notée f_{cd} ou f_{d}(f_{c},).

Les messages contenant des identifiants UID ne sont pas nécessairement reçus par l'intermédiaire d'un réseau de télécommunication. Par exemple, ces messages peuvent être transportés du serveur 4 jusqu'au terminal 8 par l'intermédiaire d'un support d'enregistrement tel qu'un CD-ROM ou une clef USB (Universal Serial Bus).

La table associative 32 peut être remplacée par d'autres mécanismes similaires. Par exemple, les limites Sₘᵢₙⱼ et Sₘₐₓⱼ peuvent être stockées dans la section de la mémoire 14 correspondant à la classe à laquelle elles sont associées.

Lors de l'étape 58, il est également possible de transformer à l'aide d'une fonction monotone g l'identifiant UID nouvellement reçu en un identifiant UID'. Ensuite, c'est cet identifiant UID' qui est comparé à des limites Sₘᵢₙⱼ' et S_{maxj'}. Dans cette variante, les limites Sₘᵢₙⱼ' et Sₘₐₓⱼ' sont construites comme décrit en regard des étapes 64 et 68 sauf que la construction de la nouvelle valeur des limites Sₘᵢₙⱼ' et Sₘₐₓⱼ' est réalisée en utilisant l'identifiant UID' à la place de l'identifiant UID. Ces limites Sₘᵢₙⱼ' et Sₘₐₓⱼ' sont donc construites en fonction de N identifiants UID déjà reçus. De plus, la fonction g est une fonction monotone croissante ou décroissante. Ainsi, la comparaison de l'identifiant UID' aux limites Sₘᵢₙⱼ' et Sₘₐₓⱼ' est l'équivalent fonctionnel d'une comparaison de l'identifiant UID aux limites Sₘᵢₙⱼ et Sₘₐₓⱼ. Ainsi, on qualifie également cette comparaison de l'identifiant UID' à la limite Sₘᵢₙⱼ' ou Sₘₐₓⱼ' d'étape de « comparaison de l'identifiant UID nouvellement reçu à la limite Sₘᵢₙⱼ ou Sₘₐₓⱼ ».

De préférence, les limites Sₘᵢₙⱼ et Sₘₐₓⱼ sont simultanément utilisées. Toutefois, ce qui est décrit fonctionne également si l'une de ces limites Sₘᵢₙⱼ ou Sₘₐₓⱼ est seule utilisée.

Dans un mode de réalisation simplifié, les identifiants UID ne sont pas répartis entre différentes classes. Dans ce cas, il n'existe qu'une seule limite Sₘᵢₙ et une seule limite Sₘₐₓ associées à l'ensemble des identifiants susceptibles d'être générés. De façon similaire, dans un mode de réalisation simplifié, la mémoire 14 n'est pas divisée en plusieurs sections. Cela permet d'éviter le recours à une fonction de répartition.

Les seuils utilisés lors des phases 84 et 100 peuvent être fixés en fonction d'un historique d'échanges de messages entre le terminal 8 et le serveur 4 ou en fonction d'un profil d'utilisateur.

Dans un autre mode de réalisation, la période d'observation Δt_{c} ou Δtᵣ est fixe.

Dans un autre mode de réalisation simplifié, les compteurs 26 et 28 sont omis et les phases 84 et 100 le sont également. Ainsi, dans ces modes de réalisation, les attaques par rejeu ne sont pas détectées en fonction du nombre d'identifiants UID reçus ou en fonction du nombre de fois où un identifiant UID est diagnostiqué comme n'étant pas reçu pour la première fois.

## Revendications

1. Procédé de diagnostic automatique de la première réception d'un identifiant, ce procédé comportant :
a) la recherche (73) d'un identifiant nouvellement reçu parmi ceux contenus dans une mémoire anti-rejeu, cette mémoire anti-rejeu pouvant contenir au plus M identifiants auxquels l'identifiant nouvellement reçu peut être comparé,
**caractérisé en ce que** le procédé comprend :
b) la construction (64, 68) d'au moins une limite en fonction des N identifiants déjà reçus, où N est strictement supérieur à M, cette limite étant construite de manière à délimiter d'un côté une plage d'identifiants qui n'ont pas encore été reçus et de l'autre côté une plage d'identifiants contenant les N identifiants déjà reçus,
c) la comparaison (58) de l'identifiant nouvellement reçu à cette limite pour déterminer si l'identifiant nouvellement reçu appartient à la plage des identifiants qui n'ont pas encore été reçus,
d) si l'identifiant nouvellement reçu appartient à la plage des identifiants qui n'ont pas encore été reçus, le diagnostic (60) d'une première réception de l'identifiant nouvellement reçu et une nouvelle construction (64, 68) de la limite en fonction de l'identifiant nouvellement reçu, et
e) si l'identifiant nouvellement reçu appartient à la plage d'identifiants contenant les N identifiants déjà reçus, l'exécution de l'étape a).

2. Procédé selon la revendication 1, dans lequel le procédé comprend :
- la construction (64, 68) de ladite limite pour différentes classes d'identifiants, pour chaque classe d'identifiants la limite associée à cette classe étant construite en fonction desdits au moins N identifiants déjà reçus et appartenant à cette classe d'identifiants,
- l'identification (54) de la classe d'identifiants à laquelle appartient l'identifiant nouvellement reçu parmi les classes d'identifiants existantes, et
- l'étape c) consiste à comparer (58) l'identifiant nouvellement reçu à la limite associée à la classe identifiée et à ne pas comparer l'identifiant nouvellement reçu aux limites associées aux classes auxquelles il n'appartient pas.

3. Procédé selon l'une quelconque des revendications précédentes, dans lequel le procédé comprend :
- l'identification (62, 71), à l'aide d'une loi prédéterminée de répartition des différents identifiants recevables dans différentes sections de la mémoire anti-rejeu, de la section de la mémoire anti-rejeu dans laquelle l'identifiant nouvellement reçu est enregistrable, parmi plusieurs sections existantes, et
- lors de l'étape a), la recherche (73) de l'identifiant nouvellement reçu parmi les seuls identifiants contenus dans la section identifiée de la mémoire anti-rejeu et non parmi les identifiants contenus dans les sections de la mémoire anti-rejeu dans lesquelles l'identifiant nouvellement reçu n'est pas enregistrable.

4. Procédé selon l'une quelconque des revendications précédentes, dans lequel le procédé comprend :
- le comptage (88) du nombre d'identifiants nouvellement reçus pendant un intervalle de temps,
- la comparaison (90) de ce nombre à un seuil prédéterminé, et
- si et seulement si le seuil prédéterminé est franchi, la détection d'une attaque par rejeu (94).

5. Procédé selon l'une quelconque des revendications précédentes, dans lequel le procédé comprend :
- le comptage (104) du nombre d'identifiants, pendant un intervalle de temps, pour lesquels il est diagnostiqué qu'ils ne sont pas reçus pour la première fois,
- la comparaison (106) de ce nombre à un seuil prédéterminé, et
- si et seulement si ce seuil est franchi, la détection d'une attaque par rejeu (110).

6. Procédé selon l'une quelconque des revendications précédentes, dans lequel, si l'étape d) est exécutée, l'étape a) n'est pas exécutée pour cet identifiant nouvellement reçu.

7. Procédé selon l'une quelconque des revendications précédentes, dans lequel la construction de la limite comprend la détermination d'un minorant ou d'un majorant des N identifiants déjà reçus.

8. Procédé de détection du rejeu d'un message, chaque message contenant un identifiant permettant de le distinguer des autres messages, ce procédé comportant :
- un diagnostic automatique de la première réception de l'identifiant pour établir si un message reçu est rejoué,
**caractérisé en ce que** le diagnostic est réalisé conformément au procédé de diagnostic de l'une quelconque des revendications précédentes.

9. Support (36) d'enregistrement d'informations, **caractérisé en ce qu'**il comporte des instructions pour l'exécution d'un procédé conforme à l'une quelconque des revendications précédentes, lorsque ces instructions sont exécutées par un calculateur électronique.

10. Programme d'ordinateur, **caractérisé en ce qu'**il comporte des instructions pour l'exécution d'un procédé conforme à l'une quelconque des revendications 1 à 8, lorsque ces instructions sont exécutées par un calculateur électronique.

11. Dispositif de diagnostic automatique de la première réception d'un identifiant, ce dispositif comportant :
- un module de recherche (20) d'un identifiant nouvellement reçu parmi ceux contenus dans une mémoire anti-rejeu,
- la mémoire anti-rejeu (14), cette mémoire pouvant contenir au plus M identifiants auxquels l'identifiant nouvellement reçu peut être comparé,
**caractérisé en ce que** le dispositif comprend :
- un constructeur (24) d'au moins une limite en fonction de N identifiants déjà reçus, où N est strictement supérieur à M, la limite étant construite de manière à délimiter d'un côté une plage d'identifiants qui n'ont pas encore été reçus et de l'autre côté une plage d'identifiants contenant les N identifiants déjà reçus,
- un comparateur (22) de l'identifiant nouvellement reçu à cette limite pour déterminer si l'identifiant reçu appartient à la plage des identifiants qui n'ont pas encore été reçus, ce comparateur étant apte :
- à diagnostiquer une première réception de l'identifiant nouvellement reçu si ce nouvel identifiant appartient à la plage des identifiants qui n'ont pas encore été reçus et à activer le constructeur pour lancer une nouvelle construction de la limite en fonction de l'identifiant nouvellement reçu, et
- à activer le module de recherche pour lancer la recherche de l'identifiant nouvellement reçu parmi ceux contenus dans la mémoire anti-rejeu si l'identifiant nouvellement reçu appartient à la plage des identifiants contenant les N identifiants déjà reçus.

## Claims

1. Automatic diagnostic method for diagnosing the first reception of an identifier, this method comprising:
a) the search (73) for an identifier that is newly received amongst those contained in an anti-replay memory, this anti-replay memory being able to contain at most M identifiers with which the newly received identifier can be compared,
**characterized in that** the method comprises:
b) the construction (64, 68) of at least one limit as a function of the N identifiers already received, in which N is strictly greater than M, this limit being constructed so as to delimit on the one hand a range of identifiers that have not yet been received and, on the other hand, a range of identifiers containing the N identifiers already received,
c) the comparison (58) of the newly received identifier with this limit in order to determine whether the newly received identifier belongs to the range of identifiers that have not yet been received,
d) if the newly received identifier belongs to the range of identifiers that have not yet been received, the diagnosing (60) of a first reception of the newly received identifier and a new construction (64, 68) of the limit as a function of the newly received identifier, and
e) if the newly received identifier belongs to the range of identifiers containing the N identifiers already received, the execution of step a).

2. Method according to Claim 1, in which the method comprises:
- the construction (64, 68) of the said limit for various classes of identifiers, for each class of identifiers the limit associated with this class being constructed as a function of the said at least N identifiers already received and belonging to this class of identifiers,
- the identification (54) of the class of identifiers to which the newly received identifier belongs amongst the existing classes of identifiers, and
- step c) consists in comparing (58) the newly received identifier with the limit associated with the identified class and in not comparing the newly received identifier with the limits associated with the classes to which it does not belong.

3. Method according to either one of the preceding claims, in which the method comprises:
- the identification (62, 71), with the aid of a predetermined law of distribution of the various receivable identifiers in various sections of the anti-replay memory, of the section of the anti-replay memory in which the newly received identifier can be recorded, amongst several existing sections, and
- during step a), the search (73) for the newly received identifier amongst the only identifiers contained in the identified section of the anti-replay memory and not amongst the identifiers contained in the sections of the anti-replay memory in which the newly received identifier cannot be recorded.

4. Method according to any one of the preceding claims, in which the method comprises:
- the counting (88) of the number of identifiers newly received during a period of time,
- the comparison (90) of this number with a predetermined threshold, and
- if and only if the predetermined threshold is exceeded, the detection of an attack by replay (94).

5. Method according to any one of the preceding claims, in which the method comprises:
- the counting (104) of the number of identifiers, during a period of time, for which it is diagnosed that they have not been received for the first time,
- the comparison (106) of this number with a predetermined threshold, and
- if and only if this threshold is exceeded, the detection of an attack by replay (110).

6. Method according to any one of the preceding claims, in which, if step d) is executed, step a) is not executed for this newly received identifier.

7. Method according to any one of the preceding claims, in which the construction of the limit comprises the determination of a lower bound or of an upper bound of the N identifiers already received.

8. Method for detecting the replay of a message, each message containing an identifier making it possible to distinguish it from the other messages, this method comprising:
- an automatic diagnosis of the first reception of the identifier in order to establish whether a received message is replayed,
**characterized in that** the diagnosis is carried out according to the diagnostic method of any one of the preceding claims.

9. Medium (36) for recording information, **characterized in that** it comprises instructions for the execution of a method according to any one of the preceding claims, when these instructions are executed by an electronic computer.

10. Computer program, **characterized in that** it comprises instructions for the execution of a method according to any one Claims 1 to 8, when these instructions are executed by an electronic computer.

11. Automatic diagnostic device for diagnosing the first reception of an identifier, this device comprising:
- a search module (20) for searching for a newly received identifier amongst those contained in an anti-replay memory,
- the anti-replay memory (14), this memory being able to contain at most M identifiers with which the newly received identifier can be compared, **characterized in that** the device comprises:
- a constructor (24) of at least one limit as a function of N identifiers already received, in which N is strictly greater than M, the limit being constructed so as to delimit on the one hand a range of identifiers that have not yet been received and, on the other hand, a range of identifiers containing the N identifiers already received,
- a comparator (22) for comparing the newly received identifier with this limit in order to determine whether the received identifier belongs to the range of identifiers that have not yet been received, this comparator being capable:
- of diagnosing a first reception of the newly received identifier if this new identifier belongs to the range of identifiers that have not yet been received and of activating the constructor in order to launch a new construction of the limit as a function of the newly received identifier, and
- of activating the search module in order to launch the search of the newly received identifier amongst those contained in the anti-replay memory if the newly received identifier belongs to the range of identifiers containing the N identifiers already received.

## Patentansprüche

1. Verfahren zum automatischen Diagnostizieren des ersten Empfangs einer Kennung, wobei dieses Verfahren Folgendes aufweist:
a) die Suche (73) einer neu empfangenen Kennung unter denjenigen, die in einem Anti-Replay-Speicher enthalten sind, wobei dieser Anti-Replay-Speicher höchstens M Kennungen enthalten kann, mit denen die neu empfangene Kennung verglichen werden kann,
**dadurch gekennzeichnet, dass** das Verfahren Folgendes aufweist:
b) die Konstruktion (64, 68) von mindestens einer Grenze in Abhängigkeit von den N bereits empfangenen Kennungen, wo N streng größer als M ist, wobei diese Grenze derart konstruiert wird, dass einerseits ein Bereich von Kennungen, die noch nicht empfangen wurden, und andererseits ein Bereich von Kennungen abgegrenzt wird, der die N bereits empfangenen Kennungen enthält,
c) den Vergleich (58) der neu empfangenen Kennung mit dieser Grenze, um zu bestimmen, ob die neu empfangene Kennung zum Bereich der Kennungen gehört, die noch nicht empfangen wurden,
d) wenn die neu empfangene Kennung zu dem Bereich der Kennungen gehört, die noch nicht empfangen wurden, das Diagnostizieren (60) eines ersten Empfangs der neu empfangenen Kennung und eine neue Konstruktion (64, 68) der Grenze in Abhängigkeit von der neu empfangenen Kennung, und
e) wenn die neu empfangene Kennung zu dem Bereich von Kennungen gehört, der die N bereits empfangenen Kennungen enthält, die Ausführung des Schritts a).

2. Verfahren nach Anspruch 1, wobei das Verfahren Folgendes aufweist:
- die Konstruktion (64, 68) der Grenze für verschiedene Klassen von Kennungen, wobei für jede Klasse von Kennungen die dieser Klasse zugehörige Grenze in Abhängigkeit von den mindestens N Kennungen konstruiert wird, die bereits empfangen wurden und zu dieser Klasse von Kennungen gehören,
- die Identifizierung (54) der Klasse von Kennungen, zu der die neu empfangene Kennung gehört, unter den bestehenden Klassen von Kennungen, und
- wobei der Schritt c) im Vergleichen (58) der neu empfangenen Kennung mit der der identifizierten Klasse zugehörigen Grenze und im Nichtvergleichen der neu empfangenen Kennung mit den Grenzen besteht, die den Klassen zugehörig sind, zu denen sie nicht gehört.

3. Verfahren nach einem der vorhergehenden Ansprüche, wobei das Verfahren Folgendes aufweist:
- das Identifizieren (62, 71) des Abschnitts des Anti-Replay-Speichers, in dem die neu empfangene Kennung gespeichert werden kann, unter mehreren bestehenden Abschnitten mittels eines vorbestimmten Verteilungsgesetzes der verschiedenen zulässigen Kennungen in verschiedenen Abschnitten des Anti-Replay-Speichers, und
- beim Schritt a) das Suchen (73) der neu empfangenen Kennung lediglich unter den Kennungen, die in dem identifizierten Abschnitt des Anti-Replay-Speichers enthalten sind, und nicht unter den Kennungen, die in den Abschnitten des Anti-Replay-Speichers enthalten sind, in denen die neu empfangene Kennung nicht gespeichert werden kann.

4. Verfahren nach einem der vorhergehenden Ansprüche, wobei das Verfahren Folgendes aufweist:
- die Zählung (88) der Anzahl von während eines Zeitraums neu empfangenen Kennungen,
- den Vergleich (90) dieser Anzahl mit einer vorbestimmten Schwelle, und
- wenn, und nur wenn, die vorbestimmte Schwelle überschritten wird, die Detektion eines Replay-Angriffs (94).

5. Verfahren nach einem der vorhergehenden Ansprüche, wobei das Verfahren Folgendes aufweist:
- die Zählung (104) der Anzahl von Kennungen, für die diagnostiziert wird, dass sie nicht zum ersten Mal empfangen werden, während eines Zeitraums,
- den Vergleich (106) dieser Anzahl mit einer vorbestimmten Schwelle, und
- wenn, und nur wenn, diese Schwelle überschritten wird, die Detektion eines Replay-Angriffs (110).

6. Verfahren nach einem der vorhergehenden Ansprüche, wobei der Schritt a), wenn der Schritt d) ausgeführt wird, nicht für diese neu empfangene Kennung ausgeführt wird.

7. Verfahren nach einem der vorhergehenden Ansprüche, wobei die Konstruktion der Grenze die Bestimmung einer Minorante oder einer Majorante der N bereits empfangenen Kennungen aufweist.

8. Verfahren zur Detektion der Wiedereinspielung einer Nachricht, wobei jede Nachricht eine Kennung enthält, die es ermöglicht, sie von den anderen Nachrichten zu unterscheiden, wobei dieses Verfahren Folgendes aufweist:
- ein automatisches Diagnostizieren des ersten Empfangs der Kennung, um festzustellen, ob eine empfangene Nachricht wiedereingespielt wird,
**dadurch gekennzeichnet, dass** das Diagnostizieren nach dem Verfahren zum Diagnostizieren nach einem der vorhergehenden Ansprüche ausgeführt wird.

9. Informationsspeichermedium (36), **dadurch gekennzeichnet, dass** es Befehle für die Ausführung eines Verfahrens nach einem der vorhergehenden Ansprüche aufweist, wenn diese Befehle durch einen elektronischen Rechner ausgeführt werden.

10. Computersoftware, **dadurch gekennzeichnet, dass** sie Befehle für die Ausführung eines Verfahrens nach einem der Ansprüche 1 bis 8 aufweist, wenn diese Befehle durch einen elektronischen Rechner ausgeführt werden.

11. Einrichtung zum automatischen Diagnostizieren des ersten Empfangs einer Kennung, wobei diese Einrichtung Folgendes aufweist:
- ein Modul (20) zum Suchen einer neu empfangenen Kennung unter denjenigen, die in einem Anti-Replay-Speicher enthalten sind,
- den Anti-Replay-Speicher (14), wobei dieser Speicher höchstens M Kennungen enthalten kann, mit denen die neu empfangene Kennung verglichen werden kann,
**dadurch gekennzeichnet, dass** die Einrichtung Folgendes aufweist:
- einen Konstruktor (24) von mindestens einer Grenze in Abhängigkeit von N bereits empfangenen Kennungen, wo N streng größer ist als M, wobei die Grenze derart konstruiert wird, dass sie einerseits einen Bereich von Kennungen, die noch nicht empfangen wurden, und andererseits einen Bereich von Kennungen abgrenzt, der die N bereits empfangenen Kennungen enthält,
- einen Komparator (22) der neu empfangenen Kennung mit dieser Grenze, um zu bestimmen, ob die empfangene Kennung zum Bereich der Kennungen gehört, die noch nicht empfangen wurden, wobei dieser Komparator geeignet ist:
- um einen ersten Empfang der neu empfangenen Kennung zu diagnostizieren, wenn diese neue Kennung zum Bereich der Kennungen gehört, die noch nicht empfangen wurden, und den Konstruktor zu aktivieren, um eine neue Konstruktion der Grenze in Abhängigkeit von der neu empfangenen Kennung zu starten, und
- um das Suchmodul zu aktivieren, um die Suche der neu empfangenen Kennung unter denjenigen zu starten, die im Anti-Replay-Speicher enthalten sind, wenn die neu empfangene Kennung zum Bereich der Kennungen gehört, der die N bereits empfangenen Kennungen enthält.
